(19) Europäisches Patentamt
European Patent Office
Office européen des brevets

(11) **EP 4 038 136 B1**

(12) **EUROPEAN PATENT SPECIFICATION**

(45) Date of publication and mention
of the grant of the patent:
**19.11.2025 Bulletin 2025/47**

(21) Application number: **20775669.3**

(22) Date of filing: **28.09.2020**

(51) International Patent Classification (IPC):
**C08L 23/12** (2006.01)    **C08L 23/16** (2006.01)

(52) Cooperative Patent Classification (CPC):
(C-Sets available)
**C08L 23/12;** C08L 2203/12; C08L 2207/02   (Cont.)

(86) International application number:
**PCT/EP2020/077033**

(87) International publication number:
**WO 2021/063855 (08.04.2021 Gazette 2021/14)**

(54) **PROPYLENE BASED FILAMENT FOR 3D PRINTER**

PROPYLENBASIERTES FILAMENT FÜR 3D-DRUCKER

FILAMENT À BASE DE PROPYLÈNE POUR IMPRIMANTE 3D

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.10.2019 EP 19200725**

(43) Date of publication of application:
**10.08.2022 Bulletin 2022/32**

(73) Proprietor: **Basell Polyolefine GmbH**
**50389 Wesseling (DE)**

(72) Inventors:
• **LANGENFELDER, Dieter**
**65527 Niedernhausen (DE)**
• **ROHRMANN, Jürgen**
**65779 Kelkheim (DE)**
• **SCHMITZ, Karsten**
**65719 Hofheim / Ts. (DE)**
• **SCHIRMEISTER, Carl Gunther**
**79211 Denzlingen (DE)**
• **KESSLER, Yannic**
**65830 Kriftel (DE)**
• **LICHT, Erik Hans**
**55128 Mainz (DE)**
• **CALLSEN, Christoph**
**95233 Helmbrechts (DE)**
• **ALTSTÄDT, Volker**
**20099 Hamburg (DE)**

(74) Representative: **LyondellBasell**
**c/o Basell Poliolefine Italia**
**Intellectual Property**
**P.le Donegani 12**
**44122 Ferrara (IT)**

(56) References cited:
**US-A1- 2019 232 554     US-B1- 6 248 833**

• **LYONDELL BASELL: "Catalloy TPO Resins", 31
December 2013 (2013-12-31), XP002801148,
Retrieved from the Internet <URL:https://www.
lyondellbasell.com/globalassets/documents/
polymers-technical-literature/
catalloy-tpo-resins-brochure-eu1.pdf?id=14377>
[retrieved on 20201118]**
• **K. SENTHIL KUMAR ET AL: "Development of
Long Glass Fiber Reinforced Polypropylene
Composites: Mechanical and Morphological
Characteristics", JOURNAL OF REINFORCED
PLASTICS AND COMPOSITES, vol. 26, no. 3, 1
February 2007 (2007-02-01), US, pages 239 - 249,
XP055751823, ISSN: 0731-6844, DOI: 10.1177/
0731684407070040**

**(Cont. next page)**

EP 4 038 136 B1

(52) Cooperative Patent Classification (CPC): (Cont.)

C-Sets
**C08L 23/12, C08L 23/16;**
**C08L 23/12, C08L 23/16, C08K 7/14**

**Description**

FIELD OF THE INVENTION

The present disclosure relates to a filament comprising a heterophasic propylene ethylene copolymer to be used in an extrusion-based 3D printer.

BACKGROUND OF THE INVENTION

An extrusion-based 3D printer is used to build a 3D model from a digital representation of the 3D model in a layer-by-layer manner by extruding a flowable modeling material. A filament of the modeling material is extruded through an extrusion tip carried by an extrusion head, and is deposited as a sequence of roads on a substrate in an x-y plane. The extruded modeling material fuses to previously deposited modeling material, and solidifies upon a drop in temperature. The position of the extrusion head relative to the substrate is then incremented along a z-axis (perpendicular to the x-y plane), and the process is then repeated to form a 3D model resembling the digital representation. Movement of the extrusion head with respect to the substrate is performed under computer control, in accordance with build data that represents the 3D model. The build data is obtained by initially slicing the digital representation of the 3D model into multiple horizontally sliced layers. Then, for each sliced layer, the host computer generates a build path for depositing roads of modeling material to form the 3D model.

In the printing process the filament clearly plays an important role, changing the material of the filament the final mechanical and aesthetic properties of the finished object change. Usually in the art filament of polylactic acid (PLA) or acrylonitrile-butadiene-styrene (ABS) polymer or polyamides are used.

Warping occurs due to material shrinkage while 3D printing, which causes the corners of the print to lift and detach from the build plate. When plastics are printed, they firstly expand slightly but contract as they cool down. If material contracts too much, this causes the print to bend up from the build plate and deformed 3D printed objects are obtained.

Propylene based polymers have been proposed as polymers suitable for making filaments, however from the tests carried out by the applicant the propylene based filaments available on the market gave poor results in the print test, especially because warpage occurs.

CN 103992560 A discloses the use of a heterophasic propylene ethylene copolymer for 3D printing. The copolymer is composed of a propylene homopolymer matrix and a crosslinked ethylene-propylene-diolefin copolymer rubber. No explicit mention of the polymer in the form of filament is provided.

EP 3067389 A1 discloses a filament for a 3D printer including a polymer matrix containing an ethylene-based olefin block copolymer, as clearly results from the MFI measurement conditions. US 2019/232554 A1 discloses a filament for a 3D printer including heterophasic propylene copolymer and a filler.

Therefore there is the need for propylene based materials that can be used as a filament in a 3D printer.

SUMMARY OF THE INVENTION

The present disclosure provides A filament for extrusion-based additive manufacturing comprising a filled polyolefin composition having a MFR L (Melt Flow Rate according to ISO 1133, 230°C/2.16 kg load) ranging from 2.0 to 30.0 g/10 min comprising:

A) from 60 wt.% to 95 wt.%, preferably from 65 wt.% to 92 wt.%, more preferably from 70 wt.% to 90 wt.%, of a heterophasic polypropylene composition comprising:

a1) from 30 wt.% to 65 wt.%; of a propylene homopolymer or a propylene/ethylene copolymer having a content of ethylene derived units ranging from 0.1 wt.% to 4.5 wt.%, and having a xylene soluble content measured at 25°C lower than 10 wt.%;
a2) from 35 wt.% to 70 wt.% of a propylene ethylene copolymer having a content of ethylene derived units ranging from 35 wt.% to 85 wt.%, preferably from 50 wt.% to 80 wt.%, the sum a1+a2 being 100,
wherein the heterophasic polypropylene composition A) has a xylene soluble content ranging from 15 wt.% to 50 wt.%, a melt flow rate MFR L (ISO 1133, condition L, i.e. 230 °C and 2.16 kg load) ranging from 0.5 to 100 g/10 min, an intrinsic viscosity of the fraction soluble in xylene at 25°C ranging from 1.5 to 6.0 dl/g and an ethylene content ranging from 10 wt.% to 50 wt.%; and

B) from 5.0 wt.% to 40.0 wt.%, preferably from 8.0 wt.% to 35 wt.%, more preferably from 10 wt.% to 30 wt.%, of a filler,

the sum A+B being 100.

BRIEF DESCRIPTION OF THE DRAWINGS

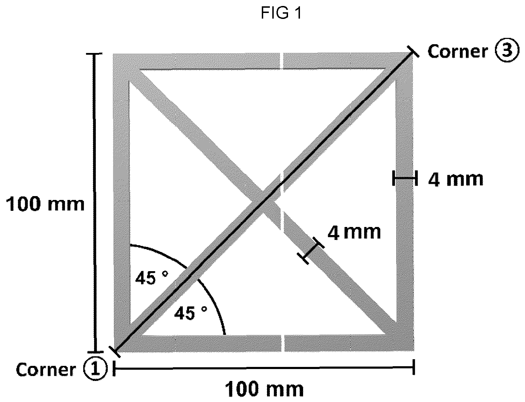

Figure 1 is the top view of a frame printed to evaluate warpage behavior.

DETAILED DESCRIPTION OF THE INVENTION

The present disclosure concerns a filament for extrusion-based additive manufacturing comprising a filled polyolefin composition having a MFR L (Melt Flow Rate according to ISO 1133, 230°C/2.16 kg load) ranging from 2.0 to 30.0 g/10 min comprising:

A) from 60 wt.% to 95 wt.%, preferably from 65 wt.% to 92 wt.%, more preferably from 70 wt.% to 90 wt.%, of a heterophasic polypropylene composition comprising:

a1) from 30 wt.% to 65 wt.%; of a propylene homopolymer or a propylene/ethylene copolymer having a content of ethylene derived units ranging from 0.1 wt.% to 4.5 wt.%, and having a xylene soluble content measured at 25°C lower than 10 wt.%;

a2) from 35 wt.% to 70 wt.% of a propylene ethylene copolymer having a content of ethylene derived units ranging from 35 wt.% to 85 wt.%, preferably from 50 wt.% to 80 wt.%, the sum a1+a2 being 100,

wherein the heterophasic polypropylene composition A) has a xylene soluble content ranging from 15 wt.% to 50 wt.%, a melt flow rate MFR L (ISO 1133, condition L, i.e. 230 °C and 2.16 kg load) ranging from 0.5 to 100 g/10 min, an intrinsic viscosity of the fraction soluble in xylene at 25°C ranging from 1.5 to 6.0 dl/g and an ethylene content ranging from 10 wt.% to 50 wt.%; and

B) from 5.0 wt.% to 40.0 wt.%, preferably from 8.0 wt.% to 35 wt.%, more preferably from 10 wt.% to 30 wt.%, of a filler,

the sum A+B being 100.

In one embodiment, the filament of the present disclosure is used as consumable filament in an extrusion-based additive manufacturing system.

The heterophasic polypropylene composition A) has a xylene soluble content ranging from 15 wt.% to 50 wt.%, preferably from 20 wt.% to 40 wt.%, more preferably from 25 wt.% to 35 wt.%.

The heterophasic polypropylene composition A) has a melt flow rate MFR L (Melt Flow Rate according to ISO 1133, condition L, i.e. 230°C and 2.16 kg load) ranging from 0.5 to 100 g/10 min, preferably from 2.0 to 50 g/10 min, more preferably from 5.0 to 20 g/10 min.

The heterophasic polypropylene composition A) has an intrinsic viscosity of the fraction soluble in xylene at 25°C ranging from 1.5 to 6.0 dl/g, preferably from 1.8 to 4.0 dl/g, more preferably from 2.0 to 2.8 dl/g, still more preferably from 2.0 to less than 2.5 dl/g.

The heterophasic polypropylene composition A) has an ethylene content ranging from 10 wt.% to 50 wt.%; preferably from 15 wt.% to 40 wt.%; more preferably from 20 wt.% to 30 wt.%.

The expression "heterophasic polypropylene composition" as used in the instant disclosure indicates that the elastomeric propylene ethylene copolymer rubber is (finely) dispersed in the matrix, i.e. in the propylene homo or copolymer. In other words the elastomeric propylene ethylene copolymer rubber forms inclusions in the matrix. Thus the matrix contains (finely) dispersed inclusions being not part of the matrix and said inclusions contain the elastomeric propylene ethylene copolymer. The term "inclusion" according to this disclosure shall preferably indicate that the matrix and the inclusion form different phases within the heterophasic system, said inclusions are for instance visible by high resolution microscopy, like electron microscopy or scanning force microscopy.

The term copolymer means that the polymer is formed by only two monomers, propylene and ethylene.

The term xylene soluble or xylene soluble fraction it is intended to be the fraction soluble in xylene at 25°C measured according to the procedure reported in the examples section.

The matrix a1) of the heterophasic propylene ethylene copolymer is preferably a propylene homopolymer.

The matrix a1) has a fraction insoluble in xylene at 25 °C preferably higher than 90 wt%, more preferably higher than 95 wt.%, even more preferably higher than 97 wt.%.

The elastomeric phase a2) is a propylene ethylene copolymer preferably having an ethylene content ranging from 35 wt.% to 85 wt.%, even more preferably from 50 wt.% to 80 wt.%.

The filament comprises a filled polyolefin composition having MFR L (Melt Flow Rate according to ISO 1133, 230°C/2.16kg load) ranging from 2.0 to 30.0 g/10min comprising:

A) from 60 wt.% to 95 wt.%; preferably from 65 wt.% to 92 wt.%, more preferably from 70 wt.% to 90 wt.% of a heterophasic polypropylene composition comprising:

a1) from 30 wt.% to 65 wt.%; of a propylene homopolymer or a propylene/ethylene copolymer having a content of ethylene derived units ranging from 0.1 wt.% to 4.5 wt.%; and having a xylene soluble content measured at 25°C lower than 10 wt.%;

a2) from 35 wt.% to 70 wt.% of a propylene ethylene copolymer having a content of ethylene derived units ranging from 35 wt.% to 85 wt.%; even more preferably from 50 wt.% to 80 wt.%,

the sum a1+a2 being 100,

the heterophasic polypropylene composition A) having a xylene soluble content ranging from 15 wt.% to 50 wt.%; preferably from 20 wt.% to 40 wt.% more preferably from 22 wt.% to 35 wt.%, a melt flow rate MFR L (Melt Flow Rate according to ISO 1133, condition L, i.e. 230°C and 2.16 kg load) ranging from 0.5 to 100 g/10 min; preferably from 2.0 to 50 g/10 min; more preferably from 5.0 to 20 g/10 min, an intrinsic viscosity of the fraction soluble in xylene at 25°C ranging from 1.5 to 6.0 dl/g, preferably from 1.8 to 4.0 dl/g, more preferably from 2.0 to 2.8 dl/g, still more preferably from 2.0 to less than 2.5 dl/g, and an ethylene content ranging from 10 wt.% to 50 wt.%; preferably from 15 wt.% to 40 wt.%; more preferably from 20 wt.% to 30 wt.%; and

B) from 5.0 wt.% to 40.0 wt.%, preferably from 8.0 wt.% to 35 wt.%, more preferably from 10 wt.% to 30 wt.%, of a filler,

the sum A+B being 100.

Resulting filled polyolefin composition has a melt flow rate (230°C/5 kg. ISO 1133) ranging from 2.0 to 30 g/10 min, more preferably from 7.0 g/10min to 15.0 g/10min.

Preferably, the filler is selected in the list consisting of talc, mica, calcium carbonate, wollastonite, glass fibers, glass spheres and carbon derived grades, more preferably the filler is glass fibres.

The glass fibres are chopped glass fibres, also known as short glass fibres or chopped strands.

The short glass fibres before being added to said composition preferably have a length of from 1 to 5 mm, more preferably from 3 to 4.5 mm.

The short glass fibres before being added to said composition preferably have a diameter of from 8 to 20 μm, more preferably from 10 to 14 μm.

Preferably, when the filler is glass fibers, the filament comprises also a compatibilizer.

A compatibilizer is a component able to improve the interfacial properties between mineral fillers and polymers. Typically, it reduces the interfacial tension between the two, but simultaneously reduces the agglomeration tendency of filler particles, thus improving their dispersion within the polymer matrix.

One type of component which can be used as compatibilizer are low molecular weight compounds having reactive polar groups which increases the polarity of the polyolefin and are intended to react with the functionalized coating or sizing of the fillers to enhance the compatibility with the polymer. Suitable functionalizations of the fillers are, for example, silanes such as aminosilanes, epoxysilanes, amidosilanes or acrylosilanes, more preferably an aminosilane.

However, the compatibilizers preferably comprise a polymer modified (functionalized) with suitable polar moieties and optionally a low molecular weight compound having reactive polar groups.

In terms of structure, the modified polymers are preferably selected from graft or block copolymers. In this context, preference is given to modified polymers containing groups deriving from polar compounds, in particular selected from acid anhydrides, carboxylic acids, carboxylic acid derivatives, primary and secondary amines, hydroxyl compounds, oxazoline and epoxides, and also ionic compounds.

Specific examples of the said polar compounds are unsaturated cyclic anhydrides and their aliphatic diesters, and the diacid derivatives. In particular, one can use maleic anhydride and compounds selected from $C_1$-$C_{10}$ linear and branched dialkyl maleates, $C_1$-$C_{10}$ linear and branched dialkyl fumarates, itaconic anhydride, $C_1$-$C_{10}$ linear and branched itaconic acid dialkyl esters, maleic acid, fumaric acid, itaconic acid and mixtures thereof.

Particular preference is given to using a propylene polymer grafted with maleic anhydride as compatibilizer.

Preferably, the coupling agent is selected in the list consisting of maleic anhydride grafted polypropylene, more preferably the coupling agent is maleic anhydride grafted polypropylene.

In one embodiment the filament comprises a polyolefin composition comprising up to 2.0 wt.%, preferably 0.1-1.5 wt.%, of a compatibilizer, preferably of a propylene polymer grafted with maleic anhydride, the amount of compatibilizer being referred to the total weight of the polyolefin composition.

When amorphous polymeric materials, such as acrylonitrile-butadiene-styrene (ABS) resins and polycarbonate resins, are used they have little or no ordered arrangements of their polymer chains in their solid states. This reduces the effects of curling and plastic deformation in the resulting 3D model or support structure.

Crystalline or semi-crystalline polymer exhibits superior mechanical properties but due to the crystallinity when used for building 3D model they show undesirable warpage effects both when the extruded filament is deposited to form a portion of a layer of a 3D model and when the road is cooled. The warpage effects renders the crystalline or semi-crystalline polymers not usable for the building of 3D object in a an extrusion-based additive manufacturing process.

The applicant found that heterophasic polypropylene composition A) of the present disclosure in combination with a filler B), can be advantageously used for building a 3D model comprising semi-crystalline polymers as shown by its value of warpage.

The heterophasic polypropylene composition A) of the present disclosure is available in the market. An example of such copolymer can be Hifax CA 7442A sold by LyondellBasell.

The filament object of the present invention can additionally contain additives normally used in the art such as antioxidants, slipping agents, process stabilizers, antiacid and nucleants.

Furthermore the filament, as provided herein, may contain wood powder, metallic powder, marble powder and similar materials normally used for obtaining 3D object having particular aesthetic appearances or improved mechanics.

An object of the present disclosure is a process for producing articles with an extrusion-based additive manufacturing system comprising extruding a flowable build material obtained from the filament of the present disclosure.

In one embodiment, the process is process for producing a 3D printed article comprising:

(i) providing a filament according to claim 1,
(ii) producing a 3D printed article from the filament, preferably extruding a flowable build material obtained from the filament.

In producing the 3D printed article the filament of the present disclosure is consumed.

A further object of the present disclosure is a process for producing articles with an extrusion-based additive manufacturing system comprising the fusion of deposited strands, drops, or beads of the above heterophasic polypropylene composition A) or of the above filled polyolefin composition.

The following examples are given to illustrate and not to limit the subject matter as presented in the accompanying claims.

EXAMPLES

The data of the propylene polymer materials were obtained according to the following methods:

**Xylene-soluble fraction at 25°C**

The Xylene Soluble fraction was measured according to ISO 16152, 2005, but with the following deviations (between brackets is what is prescribed by the ISO 16152)
The solution volume is 250 ml (200 ml)
During the precipitation stage at 25°C for 30 min, the solution, for the final 10 minutes, is kept under agitation by a magnetic stirrer (30 min, without any stirring at all)
The final drying step is done under vacuum at 70°C (100 °C)
The content of said xylene-soluble fraction is expressed as a percentage of the original 2.5 grams and then, by difference (complementary to 100), the xylene unsoluble %.

**Ethylene (C2) content**

**$^{13}$C NMR of propylene/ethylene copolymers**

$^{13}$C NMR spectra were acquired on a Bruker AV-600 spectrometer equipped with cryoprobe, operating at 160.91 MHz in the Fourier transform mode at 120°C.

The peak of the $S_{\beta\beta}$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt./v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules, 1982, 15, 1150) using the following equations:

$$PPP = 100\ T_{\beta\beta}/S \qquad PPE = 100\ T_{\beta\delta}/S \qquad EPE = 100\ T_{\delta\delta}/S$$
$$PEP = 100\ S_{\beta\beta}/S \qquad PEE= 100\ S_{\beta\delta}/S \qquad EEE = 100\ (0.25\ S_{\gamma\delta}+0.5\ S_{\delta\delta})/S$$

$$S = T_{\beta\beta} + T_{\beta\delta} + T_{\delta\delta} + S_{\beta\beta} + S_{\beta\delta} + 0.25\ S_{\gamma\delta} + 0.5\ S_{\delta\delta}$$

The molar percentage of ethylene content was evaluated using the following equation:

$$E\%\ mol = 100 * [PEP+PEE+EEE]$$

The weight percentage of ethylene content was evaluated using the following equation:

$$E\%\ wt. = \frac{100 * E\%\ mol * MW_E}{E\%\ mol * MW_{E} + P\%\ mol * MW_P}$$

where P% mol is the molar percentage of propylene content, while $MW_E$ and $MW_P$ are the molecular weights of ethylene and propylene, respectively.

The product of reactivity ratio $r_1r_2$ was calculated according to Carman (C.J. Carman, R.A. Harrington and C.E. Wilkes, Macromolecules, 1977; 10, 536) as:

$$r_1r_2 = 1 + \left(\frac{EEE+PEE}{PEP}+1\right) - \left(\frac{P}{E}+1\right)\left(\frac{EEE+PEE}{PEP}+1\right)^{0.5}$$

The tacticity of Propylene sequences was calculated as mm content from the ratio of the PPP mmT$_{\beta\beta}$ (28.90-29.65 ppm) and the whole T$_{\beta\beta}$ (29.80-28.37 ppm)

**Melt flow rate (MFR) and Melt volume rate (MVR)**

The melt flow rate MFR and the melt volume flow rate of the polymer and of the composition were determined according to ISO 1133-1 2011 (230°C, 2.16 Kg).

**Intrinsic Viscosity**

The intrinsic viscosity was determined in tetrahydronaphthalene at 135°C.

**Mechanical Properties: Tensile properties and Charpy impact strength**

Tensile properties were measured with tensile specimens DIN EN ISO 527-1 Type 1A according to the procedure DIN EN ISO 527:2012.
Charpy impact strength was measured with notched specimens DIN EN ISO 179-1eA at 23 °C according to the procedure DIN EN ISO 179-1 on rectangular specimens 80x10x4 mm from injection molded T-bars prepared according to Test Method ISO 19069-1 (2015).

**Shrinkage**

Shrinkage values have been measured according to an internal method. This method is based on ISO 294-4 but with improved specimen dimensions and using digital gauges directly connected to a computer in order to ensure a constant contact pressure in the same positions for all the samples.
Determination of processing shrinkage and total shrinkage on a plate with the dimensions of 195 mm x 100 mm x 2.5 mm and a smooth surface (without grain structure) using a measurement frame with the same dimensions and integrated digital gauges.
Processing shrinkage has been determined after 48 hours storage at room temperature on ten plates for each material both in machine direction (MD) and transverse direction (TD) and calculating the averages.
Total shrinkage has been determined after storage of the same plates at 80 ° C for 24 h on ten plates for each material plates both in machine direction (MD) and transverse direction (TD). The total shrinkage has been measured once the plates where returned to room temperature.

**Warpage measurement on a printed cube**

The warpage was measured on a 3D printed cube with an edge length of 20 mm. The verification was carried out by means of a two-step process: in a first step, images were taken (using a Leica DM6000 light microscope, objective 5 ×) of those cube edges which had the first printed layers of the cubes. The viewing direction of the images corresponded to the X-Z plane of a right-handed X-Y-Z coordinate system, where X is one of the two horizontal axes. In a second step, the images were evaluated using the software ImageJ. The functions of the software make it possible to set the scales of light microscopic images in the software as scale references. Then it is possible to output the distance between two pixels in a real length specification. This procedure was applied to the cubes as follows: the tangent through the lowest point of the recorded edge was taken as the baseline, or print bed line, and drawn into the image. Subsequently, the distance between the respectively right-hand end of the cube edge and the baseline was measured by means of the software functions, thus determining the distortion in mm. This was always done on at least 3 cubes.

**Warpage measurement on a printed frame**

Warpage was measured on a 3D printed frame having geometry according to Figure 1.
Warpage values have been established by placing the frame on a flat surface and measuring the height of the four corner positions with respect to the surface itself. Three specimens were printed and measured for each material composition.

**Example 1 - Comparative example**

The composition was built up with:

- 98.4 wt.% of a commercial polypropylene homopolymer (PP homo 1, Moplen HF 501N, MFR 10.0 g/10 min, LyondellBasell Industries);
- 0.6 wt.% of a commercial polypropylene homopolymer (PP homo 2, Moplen HF 500H MFR 1.2 g/10 min, Lyondell-Basell Industries);
- 1.0 wt.% of a standard additive package constituted by 0.30 wt% of Irgafos® 168, 0.40 wt% of Irganox® 1010, BASF, 0.20 wt% of Acrawax C®, Lonza, and 0.10 wt% of zinc oxide.

**Example 2**

The composition was built up with:

- 98.4 wt.% of a commercial polypropylene heterophasic copolymer (PP heco 1, Hifax CA 7442A, LyondellBasell Industries, MFR 12.0 g/10 min, xylene soluble content 30.0 wt.%,
- intrinsic viscosity of the fraction soluble in xylene at 25°C 2.30 dl/g, ethylene content 27.5 wt.%, matrix 60%, ethylene in the rubber phase 68 wt.%);
- 0.6 wt.% of a commercial polypropylene homopolymer (PP homo 2, Moplen HF 500H MFR 1.2 g/10 min, Lyondell-Basell Industries);
- 1.0 wt.% of a standard additive package constituted by 0.30 wt.% of Irgafos® 168, 0.40 wt.% of Irganox® 1010, BASF, 0.20 wt.% of Acrawax C®, Lonza, and 0.10 wt.% of zinc oxide.

**Example 3** - **Comparative example**

The composition was built up with:

- 77.4 wt.% of a commercial polypropylene homopolymer (PP homo 1, Moplen HF 501N, MFR 10.0 g/10 min, LyondellBasell Industries);
- 0.6 wt.% of a commercial polypropylene homopolymer (PP homo 2, Moplen HF 500H MFR 1.2 g/10 min, Lyondell-Basell Industries)
- 20.0 wt.% of short glass fibers, Thermoflow® CS EC 13636, length 4 mm, diameter 13 micron;
- 1.0 wt.% of maleic anhydride grafted polypropylene (Exxcelor PO 1020 ExxonMobil Chemical);
- 1.0 wt.% of a standard additive package constituted by 0.30 wt.% of Irgafos® 168, 0.40 wt.% of Irganox® 1010, BASF, 0.20 wt.% of Acrawax C®, Lonza, and 0.10 wt.% of zinc oxide.

**Example 4 - Comparative example**

The composition was built up with:

- 78.4 wt.% of a commercial polypropylene homopolymer (PP homo 1, Moplen HF 501N, MFR 10.0 g/10 min, LyondellBasell Industries);
- 0.6 wt.% of a commercial polypropylene homopolymer (PP homo 2, Moplen HF 500H MFR 1.2 g/10 min, Lyondell-Basell Industries)
- 20.0 wt.% of talc 20 MOOS, Imerys, having d50 particle size distribution of 50 micron;
- 1.0 wt.% of a standard additive package constituted by 0.30 wt.% of Irgafos® 168, 0.40 wt.% of Irganox® 1010, BASF, 0.20 wt.% of Acrawax C®, Lonza, and 0.10 wt.% of zinc oxide.

**Example 5**

The composition was built up with:

- 77.4 wt.% of a commercial polypropylene heterophasic copolymer (PP heco 1, Hifax CA 7442A, LyondellBasell Industries, MFR 12.0 g/10 min);
- 0.6 wt.% of a commercial polypropylene homopolymer (PP homo 2, Moplen HF 500H MFR 1.2 g/10 min, Lyondell-Basell Industries)
- 20.0 wt.% of short glass fibers, Thermoflow® CS EC 13636, length 4 mm, diameter 13 micron;
- 1.0 wt.% of maleic anhydride grafted polypropylene (Exxcelor PO 1020 ExxonMobil Chemical);
- 1.0 wt.% of a standard additive package constituted by 0.30 wt.% of Irgafos® 168, 0.40 wt.% of Irganox® 1010, BASF, 0.20 wt.% of Acrawax C®, Lonza, and 0.10 wt.% of zinc oxide.

**Example 6**

The composition was built up with:

- 78.4 wt.% of a commercial polypropylene heterophasic copolymer (PP heco 1, Hifax CA 7442A, LyondellBasell Industries);
- 0.6 wt.% of a commercial polypropylene homopolymer (PP homo 2, Moplen HF 500H MFR 1.2 g/10 min, Lyondell-Basell Industries)
- 20.0 wt.% of talc 20 MOOS, Imerys, having d50 particle size distribution of 50 micron;
- 1.0 wt.% of a standard additive package constituted by 0.30 wt.% of Irgafos® 168, 0.40 wt.% of Irganox® 1010, BASF, 0.20 wt.% of Acrawax C®, Lonza, and 0.10 wt.% of zinc oxide.

**Example 7 - Comparative example**

Example 7 is a commercial high crystallinity propylene copolymer (PP copo 1, Moplen EP3307, LyondellBasell Industries, MFR 14.0 g/10 min, xylene soluble content 26.0 wt%, intrinsic viscosity of the fraction soluble in xylene at 25°C 3.1 dl/g, ethylene content 15 wt%, matrix 68.5 wt%).

**Example 8**

Example 8 is a commercial polypropylene heterophasic copolymer copolymer (PP heco 1, Hifax CA 7442A, LyondellBasell Industries).

Compositions of Examples 1, 2, 7 and 8 were prepared with a twin-screw extruder Krupp Werner & Pfleiderer/1973, ZSK 53, screw diameter: 2 x 53, 36D with a screw rotation speed of 200 rpm and a melt temperature of 230 °C.

Compositions of Examples 3-6 were prepared with a twin-screw extruder Leistritz/2013, ZSE 27MAXX, screw diameter: 2 x 28,3, 44D with a screw rotation speed of 500 rpm and a melt temperature of 230 °C.

**Material characterization**

The characterization of compositions of examples 1-6 is reported in Table 1.

Table 1

| Properties | Ex. 1-Comp. | Ex. 2 | Ex. 3 - Comp. | Ex. 4 - Comp. | Ex. 5 | Ex. 6 |
|---|---|---|---|---|---|---|
| MFR [g/10min] | 9.1 | 10.0 | 5.3 | 10.0 | 5.8 | 11.0 |
| MVR [g/10min] | 12.0 | 14.0 | 6.2 | 12.0 | 6.7 | 13.0 |
| Tensile test | | | | | | |
| Tensile Modulus with break [N/mm$^2$] | 1412 | 1232 | 4479 | 2750 | 3261 | 1435 |
| Tensile Stress at yield [N/mm$^2$] | 33.5 | 20.6 | 72.4 | 36.8 | 38.9 | 18.8 |
| Elongation at yield [%] | 10.0 | 6.6 | 3.1 | 5.9 | 4.9 | 6.8 |
| Tensile strength [N/mm$^2$] | 33.8 | 20.7 | 72.4 | 36.8 | 38.9 | 18.9 |
| Tensile stress at break [N/mm$^2$] | 33.8 | 16.9 | 70.7 | 9.8 | 35.7 | 11.1 |
| Elongation at break [%] | 670.8 | 61.0 | 3.9 | 50.4 | 7.9 | 118.4 |
| Charpy notched | | | | | | |
| Charpy Notched Impact Strength 23 °C [kJ/m$^2$] | 4.38 | 14.51 | 8.97 | 3.66 | 21.55 | 26.40 |
| Shrinkage | | | | | | |
| Mould shrinkage (MD/TD) [%] | 1.33/1.49 | 0.60/0.87 | 0.37/0.99 | 1.18/1.33 | 0.14/0.54 | 0.42/0.67 |
| Total shrinkage (MD/TD) [%] | 1.63/1.82 | 0.71/1.00 | 0.40/1.14 | 1.48/1.51 | 0.15/0.57 | 0.50/0.77 |

**Filament production**

A Brabender twin-screw extruder was used. The die direction was 90° to the extrusion direction downwards.

Pellet dosing: hopper

Die diameter: 3 mm.

Filament diameter: 2.85 mm.

Strand cooling: water bath.

Pulling velocity: 30 - 66 mm/s.

**Warpage measurement**

Warpage was evaluated in two different ways: the first one was on a printed cube and the second one on a printed frame.

**Printing process for the cube**

The 3D printer was a DeltaTowerDual XL printer. The printer conditions are the followings:

Maximum build volume: 500 x 500 x 900 mm
Maximum nozzle temperature: 295 °C

Maximum bed temperature (build-in): 75°C
Maximum bed temperature (external): 150 °C
Print heads: 2 extruders with interchangeable 0.4 mm (brass) and 0.8 mm (hardened steel) dies
Slicer: Simplify3D
Die: 0.8 mm bronze die
Die temperatures: 165 - 215 °C
Bed temperatures: 80 - 140 °C
Printing speed: 30 - 40 mm/s

Table 2 shows the average deviation of the cube edge from the target dimension in mm (theoretical cube edge).

Table 2

| Material | Average deviation from the target dimension [mm] |
|---|---|
| Ex. 1 - Comparative | 0.103 |
| Ex. 2 | 0.035 |
| Ex. 3 - Comparative | 0.035 |
| Ex. 4 - Comparative | 0.075 |
| Ex. 5 | 0.031 |
| Ex. 6 | 0.060 |

The data shows the warpage reduction of the printed cubes by replacing the homopolymer by the heterophasic polypropylene composition according to the present disclosure.
The trend is visible at unfilled, glass fiber reinforced and talc filled material samples.

**Printing process for the frame**

A frame with the geometry according to figure 1 was printed .
The 3D printer was a Ultimaker S5. The printer conditions are the followings:

Slicer: Cura
Die: 0.4 mm bronze die
Die temperature: 210 °C
Bed temperature: 90 °C
Printing speed: 25 mm/s

Table 3 shows the warpage behavior of the frames.

Table 3

| Material | | Corner 1 [mm] | Corner 2 [mm] | Corner 3 [mm] | Corner 4 [mm] |
|---|---|---|---|---|---|
| Ex. 7 - Comparative | Frame 1 | 5.8 | 6.0 | 7.0 | 5.0 |
| | Frame 2 | 6.1 | 6.6 | 6.2 | 5.9 |
| | Frame 3 | 5.0 | 7.0 | 5.0 | 5.5 |
| Ex. 8 | Frame 1 | 2.8 | 2.8 | 2.2 | 2.6 |
| | Frame 2 | 3.1 | 2.9 | 3.5 | 2.3 |
| | Frame 3 | 5.4 | 3.9 | 4.1 | 3.6 |

The data shows the warpage reduction of the frame by using the heterophasic polypropylene composition according to the disclosure.

# EP 4 038 136 B1

**Claims**

1. A filament for extrusion-based additive manufacturing comprising a filled polyolefin composition having a MFR L (Melt Flow Rate according to ISO 1133, 230°C/2.16 kg load) ranging from 2.0 to 30.0 g/10 min comprising:

   A) from 60 wt.% to 95 wt.%, preferably from 65 wt.% to 92 wt.%, more preferably from 70 wt.% to 90 wt.%, of a heterophasic polypropylene composition comprising:

   a1) from 30 wt.% to 65 wt.%; of a propylene homopolymer or a propylene/ethylene copolymer having a content of ethylene derived units ranging from 0.1 wt.% to 4.5 wt.%, and having a xylene soluble content measured at 25°C lower than 10 wt.%;
   a2) from 35 wt.% to 70 wt.% of a propylene ethylene copolymer having a content of ethylene derived units ranging from 35 wt.% to 85 wt.%, preferably from 50 wt.% to 80 wt.%, the sum a1+a2 being 100, wherein the heterophasic polypropylene composition A) has a xylene soluble content ranging from 15 wt.% to 50 wt.%, a melt flow rate MFR L (ISO 1133, condition L, i.e. 230 °C and 2.16 kg load) ranging from 0.5 to 100 g/10 min, an intrinsic viscosity of the fraction soluble in xylene at 25°C ranging from 1.5 to 6.0 dl/g and an ethylene content ranging from 10 wt.% to 50 wt.%; and

   B) from 5.0 wt.% to 40.0 wt.%, preferably from 8.0 wt.% to 35 wt.%, more preferably from 10 wt.% to 30 wt.%, of a filler,

   the sum A+B being 100.

2. The filament according to claim 1, wherein the filler is selected in the list consisting of talc, mica, calcium carbonate, wollastonite, glass fibers, glass spheres and carbon derived grades.

3. The filament according to claim 2, wherein the filler is glass fibers.

4. The filament according to claim 3, wherein the polyolefin composition further comprises a propylene polymer grafted with maleic anhydride.

5. The filament according to anyone of claims 1-4, wherein the polyolefin composition has a MFR L (Melt Flow Rate according to ISO 1133, 230°C and 2.16 kg load) ranging from 7.0 g/10min to 15.0 g/10min.

6. The filament according to any one of claims 1-5, wherein the heterophasic polypropylene composition A) has a xylene soluble content ranging from 20 wt.% to 40 wt.%, preferably from 22 wt.% to 35 wt.%.

7. The filament according to any one of claims 1-6, wherein the heterophasic polypropylene composition A) has a melt flow rate MFR L (ISO 1133, 230 °C and 2.16 kg load) ranging from 2.0 to 50 g/10 min, preferably from 5.0 to 20 g/10 min.

8. The filament according to any one of claims 1-7, wherein the heterophasic polypropylene composition A) has an intrinsic viscosity of the fraction soluble in xylene at 25°C ranging from 1.8 to 4.0 dl/g, preferably from 2.0 to 2.8 dl/g, more preferably from 2.0 to less than 2.5 dl/g.

9. The filament according to anyone of claims 1-8, wherein the heterophasic polypropylene composition A) has an ethylene content ranging from 15 wt.% to 40 wt.%, preferably from 20 wt.% to 30 wt.%.

10. Use of a filament according to anyone of claims 1-9 for the production of 3D printed articles.

11. A process for producing a 3D printed article comprising:

    (i) providing a filament, comprising a filled polyolefin composition as described in any one of claims 1-9, and
    (ii) producing a 3D printed article from the filament.

12. A process for producing articles with an extrusion-based additive manufacturing system comprising the fusion of deposited strands, drops, or beads of the filled polyolefin composition of claims 1-9.

**Patentansprüche**

1. Filament zur extrusionsbasierten generativen Fertigung, umfassend eine gefüllte Polyolefinzusammensetzung mit einer MFR L (Schmelzflussrate gemäß ISO 1133, 230 °C/2,16 kg Last) im Bereich von 2,0 bis 30,0 g/10 min, umfassend:

   A) von 60 Gew.% bis 95 Gew.%, vorzugsweise von 65 Gew.% bis 92 Gew.%, bevorzugter von 70 Gew.% bis 90 Gew.%, von einer heterophasischen Polypropylenzusammensetzung, umfassend:

      a1) von 30 Gew.% bis 65 Gew.% eines Propylenhomopolymers oder eines Propylen/Ethylen-Copolymers mit einem Gehalt an von Ethylen abgeleiteten Einheiten im Bereich von 0,1 Gew.% bis 4,5 Gew.%, und mit einem bei 25 °C gemessenen Gehalt an xylollöslichem Material kleiner als 10 Gew.%;
      a2) von 35 Gew.% bis 70 Gew.% eines Propylen/Ethylen-Copolymers mit einem Gehalt an von Ethylen abgeleiteten Einheiten im Bereich von 35 Gew.% bis 85 Gew.%, vorzugsweise von 50 Gew.% bis 80 Gew.%, wobei die Summe von a1+a2 100 beträgt,
      wobei die heterophasische Polypropylenzusammensetzung A) einen Gehalt an xylollöslichem Material im Bereich von 15 Gew.% bis 50 Gew.%, eine Schmelzflussrate MFR L (ISO 1133, Bedingung L, d. h. 230 °C und 2,16 kg Last) im Bereich von 0,5 bis 100 g/10 min, eine Grenzviskosität der bei 25 °C in Xylol löslichen Fraktion im Bereich von 1,5 bis 6,0 dl/g und einen Ethylengehalt im Bereich von 10 Gew.% bis 50 Gew.% aufweist; und

   B) von 5,0 Gew.% bis 40,0 Gew.%, vorzugsweise 8,0 Gew.% bis 35 Gew.%, bevorzugter 10 Gew.% bis 30 Gew.% eines Füllstoffs,

   wobei die Summe von A+B 100 beträgt.

2. Filament nach Anspruch 1, wobei der Füllstoff ausgewählt ist aus der Liste bestehend aus Talkum, Glimmer, Calciumcarbonat, Wollastonit, Glasfasern, Glaskugeln und von Kohlestoff abgeleiteten Sorten.

3. Filament nach Anspruch 2, wobei der Füllstoff Glasfasern ist.

4. Filament nach Anspruch 3, wobei die Polyolefinzusammensetzung des Weiteren ein Propylenpolymer umfasst, das mit Maleinsäureanhydrid gepfropft ist.

5. Filament nach einem der Ansprüche 1 bis 4, wobei die Polyolefinzusammensetzung eine MFR L (Schmelzflussrate gemäß ISO 1133, 230 °C und 2,16 kg Last) im Bereich von 7,0 g/10 min bis 15,0 g/10 min aufweist.

6. Filament nach einem der Ansprüche 1 bis 5, wobei die heterophasische Polypropylenzusammensetzung A) einen Gehalt an xylollöslichem Material im Bereich von 20 Gew.% bis 40 Gew.%, vorzugsweise von 22 Gew.% bis 35 Gew.% aufweist.

7. Filament nach einem der Ansprüche 1 bis 6, wobei die heterophasische Polypropylenzusammensetzung A) eine Schmelzflussrate MFR L (ISO 1133, 230 °C und 2,16 kg Last) im Bereich von 2,0 bis 50 g/10 min, vorzugsweise von 5,0 bis 20 g/10 min aufweist.

8. Filament nach einem der Ansprüche 1 bis 7, wobei die heterophasische Polypropylenzusammensetzung A) eine Grenzviskosität der bei 25 °C in Xylol löslichen Fraktion im Bereich von 1,8 bis 4,0 dl/g, vorzugsweise von 2,0 bis 2,8 dl/g, bevorzugter von 2,0 bis weniger als 2,5 dl/g aufweist.

9. Filament nach einem der Ansprüche 1 bis 8, wobei die heterophasische Polypropylenzusammensetzung A) einen Ethylengehalt im Bereich von 15 Gew.% bis 40 Gew.%, vorzugsweise von 20 Gew.% bis 30 Gew.% aufweist.

10. Verwendung eines Filaments gemäß einem der Ansprüche 1 bis 9 zur Produktion von 3D-gedruckten Artikeln.

11. Verfahren zur Herstellung eines 3D-gedruckten Artikels, umfassend:

    (i) Bereitstellen eines Filaments, umfassend eine gefüllte Polyolefinzusammensetzung, wie in einem der Ansprüche 1 bis 9 beschrieben, und

(ii) Herstellen eines 3D-gedruckten Artikels aus dem Filament.

12. Verfahren zur Herstellung von Artikeln mit einem extrusionsbasierten generativen Fertigungssystem, umfassend das Verschmelzen von abgeschiedenen Strängen, Tropfen oder Perlen der gefüllten Polyolefinzusammensetzung der Ansprüche 1 bis 9.

**Revendications**

1. Filament pour la fabrication additive basée sur l'extrusion comprenant une composition polyoléfinique chargée présentant un MFR L (indice de fluidité à chaud selon la norme ISO 1133, 230 °C/sous une charge de 2,16 kg) situé dans la plage de 2,0 à 30,0 g/10 min comprenant :

   A) 60 % en poids à 95 % en poids, de préférence 65 % en poids à 92 % en poids, plus préférablement 70 % en poids à 90 % en poids, d'une composition de polypropylène hétérophasique comprenant :

      a1) 30 % en poids à 65 % en poids d'un homopolymère de propylène ou d'un copolymère de propylène/éthylène présentant une teneur en motifs dérivés de l'éthylène située dans la plage de 0,1 % en poids à 4,5 % en poids et présentant une teneur en solubles dans le xylène mesurée à 25 °C inférieure à 10 % en poids ;
      a2) 35 % en poids à 70 % en poids d'un copolymère de propylène/éthylène présentant une teneur en motifs dérivés de l'éthylène située dans la plage de 35 % en poids à 85 % en poids, de préférence de 50 % en poids à 80 % en poids, la somme a1+a2 valant 100,
      la composition de polypropylène hétérophasique A) présentant une teneur en solubles dans le xylène située dans la plage de 15 % en poids à 50 % en poids, un indice de fluidité à chaud MFR L (ISO 1133, condition L, c'est-à-dire 230 °C et sous une charge de 2,16 kg) situé dans la plage de 0,5 à 100 g/10 min, une viscosité intrinsèque de la fraction soluble dans le xylène à 25 °C située dans la plage de 1,5 à 6,0 dl/g et une teneur en éthylène située dans la plage de 10 % en poids à 50 % en poids ; et

   B) 5,0 % en poids à 40,0 % en poids, de préférence 8,0 % en poids à 35 % en poids, plus préférablement 10 % en poids à 30 % en poids, d'une charge,

   la somme A+B valant 100.

2. Filament selon la revendication 1, la charge étant choisie dans la liste constituée par le talc, le mica, le carbonate de calcium, la wollastonite, les fibres de verre, les billes de verre et les classes dérivées du carbone.

3. Filament selon la revendication 2, la charge étant des fibres de verre.

4. Filament selon la revendication 3, la composition polyoléfinique comprenant en outre un polymère de propylène greffé par de l'anhydride maléique.

5. Filament selon l'une quelconque des revendications 1 à 4, la composition polyoléfinique présentant un MFR L (indice de fluidité à chaud selon la norme ISO 1133, 230 °C et sous une charge de 2,16 kg) situé dans la plage de 7,0 g/10 min à 15,0 g/10 min.

6. Filament selon l'une quelconque des revendications 1 à 5, la composition de polypropylène hétérophasique A) présentant une teneur en solubles dans le xylène située dans la plage de 20 % en poids à 40 % en poids, de préférence de 22 % en poids à 35 % en poids.

7. Filament selon l'une quelconque des revendications 1 à 6, la composition de polypropylène hétérophasique A) présentant un indice de fluidité à chaud MFR L (ISO 1133, 230 °C et sous une charge de 2,16 kg) situé dans la plage de 2,0 à 50 g/10 min, de préférence de 5,0 à 20 g/10 min.

8. Filament selon l'une quelconque des revendications 1 à 7, la composition de polypropylène hétérophasique A) présentant une viscosité intrinsèque de la fraction soluble dans le xylène à 25°C située dans la plage de 1,8 à 4,0 dl/g, de préférence de 2,0 à 2,8 dl/g, plus préférablement de 2,0 à moins de 2,5 dl/g.

9. Filament selon l'une quelconque des revendications 1 à 8, la composition de polypropylène hétérophasique A) présentant une teneur en éthylène située dans la plage de 15 % en poids à 40 % en poids, de préférence de 20 % en poids à 30 % en poids.

10. Utilisation d'un filament selon l'une quelconque des revendications 1 à 9 pour la production d'articles imprimés en 3D.

11. Procédé de production d'un article imprimé en 3D comprenant :

(i) la fourniture d'un filament, comprenant une composition polyoléfinique chargée telle que décrite dans l'une quelconque des revendications 1 à 9 et
(ii) la production d'un article imprimé en 3D à partir du filament.

12. Procédé de production d'articles à l'aide d'un système de fabrication additive basé sur l'extrusion comprenant la fusion de brins, de gouttes ou de billes déposés de la composition polyoléfinique chargée selon les revendications 1 à 9.

FIG 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103992560 A
- EP 3067389 A1
- US 2019232554 A1

**Non-patent literature cited in the description**

- **C. J. CARMAN** ; **R. A. HARRINGTON** ; **C. E. WILKES**. Monomer Sequence Distribution in Ethylene-Propylene Rubber Measured by 13C NMR. 3. Use of Reaction Probability Mode. *Macromolecules*, 1977, vol. 10, 536

- **M. KAKUGO** ; **Y. NAITO** ; **K. MIZUNUMA** ; **T. MIYATAKE**. Carbon-13 NMR determination of monomer sequence distribution in ethylene-propylene copolymers prepared with $\delta$-titanium trichloride-diethylaluminum chloride. *Macromolecules*, 1982, vol. 15, 1150
- **C.J. CARMAN** ; **R.A. HARRINGTON** ; **C.E. WILKES**. 10. *Macromolecules*, 1977, 536